(19) Europäisches Patentamt
European Patent Office
Office européen des brevets

(11) Veröffentlichungsnummer: **0 088 301**
**B1**

(12) # EUROPÄISCHE PATENTSCHRIFT

(45) Veröffentlichungstag der Patentschrift: **02.10.85**

(51) Int. Cl.[4]: **C 08 F 38/02**

(21) Anmeldenummer: **83101841.1**

(22) Anmeldetag: **25.02.83**

(54) **Verfahren zur Herstellung von Poly(acetylen)filmen.**

(30) Priorität: **05.03.82 DE 3207857**

(43) Veröffentlichungstag der Anmeldung: **14.09.83 Patentblatt 83/37**

(45) Bekanntmachung des Hinweises auf die Patenterteilung: **02.10.85 Patentblatt 85/40**

(84) Benannte Vertragsstaaten: **BE DE FR GB**

(56) Entgegenhaltungen:
**EP - A - 0 017 133**
**EP - A - 0 065 691**

**CHEMICAL ABSTRACTS, Band 94, Nr. 2, Januar 1981, Seite 12, Nr. 4403x, Columbus, Ohio, USA**

(73) Patentinhaber: **BASF Aktiengesellschaft, Carl-Bosch-Strasse 38, D-6700 Ludwigshafen (DE)**

(72) Erfinder: **Naarmann, Herbert, Dr., Haardtblick 15, D-6719 Wattenheim (DE)**
Erfinder: **Penzien, Klaus, Dr., Bensheimer Ring 18, D-6710 Frankenthal (DE)**
Erfinder: **Simak, Petr, Dr., Philipp-Scheidemann-Strasse 17, D-6700 Ludwigshafen (DE)**

**EP 0 088 301 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zur Herstellung von Poly(acetylen)-filmen mit Schichtdicken von 2 bis 20 000 µm durch Polymerisation von Acetylen mit aktiven Übergangsmetallkatalysatoren auf festen Trägeroberflächen.

Bei derartigen Verfahren werden Poly(acetylen)filme erhalten, die von der Trägersubstanz abgelöst werden können.

Durch die Arbeiten von Shirakawa ist es bekannt geworden, daß die Polymerisation von Acetylen an Zieglerkatalysatoren mechanisch feste Filme aus Poly(acetylen) liefern kann (vgl. »Journal of Polymer Science, Polymer Chemical Edition« 12, (1974), 11—20, sowie Chemical Abstracts 81 (1974), S. 22, Nr. 36 223). Kennzeichnend für die verwendeten Kontakte aus Aluminiumalkylen und Titan- bzw. Vanadinverbindungen ist die Möglichkeit, diese aus homogener Lösung als Feststoff-freie Filme auf Trägern auszubreiten, wonach mit Acetylen begast und die entstandenen Poly(acetylen)filme extrahiert und getrocknet werden. Bei niederen Konzentrationen an Übergangsmetallkatalysatoren bilden sich Poly(acetylen)-gele, die als solche noch keine mechanische Festigkeit aufweisen (vgl. DE-PS 3 041 421). Bei höherer Katalysatorkonzentration bilden sich filmförmige Poly(acetylene) (vgl. »Journal of Polymer Science, Polymer Chemical Edition« 12 (1974), 11—20; Chemical Abstracts 81, (1974), S. 22, Nr. 26 223X, und DE-OS 3 120 441).

Die bekannten Verfahren arbeiten mit — in Toluol — gelösten Katalysatoren unter Trockeneiskühlung oder bei —20° C, wenn mechanisch feste Filme hergestellt werden sollen. Dabei entstehen hohe Kosten, die für die Tiefkühlung von Apparaten anfallen. Arbeitet man nach den bekannten Verfahren bei höherer Temperatur z. B. in n-Hexadecan, so erhält man inhomogene und dünne und brüchige Poly(acetylen)filme, welche unbrauchbar sind. Das gleiche negative Resultat stellt sich bei Verwendung eines lösungsmittelfreien Katalysatorkontaktes ein (vgl. »Synthetics Metals« 2, (1980), 175—184). Es ist also ein Nachteil der aus der Literatur bekannten Verfahren, daß es bei Raumtemperatur nicht möglich ist, homogene Poly(acetylen)filme mit genügender Schichtstärke und Festigkeit herzustellen. Verwendet man eine 20%ige toluolische Lösung oder einen 100%igen Kontakt aus Aluminiumtriethyl und Titantetrabuylat, so erhält man bei Raumtemperatur und genügend langer Reaktionszeit zwar Filme, diese sind aber inhomogen und von Strömungslinien und Wellen durchzogen und erreichen in keiner Weise die Homogenität und Festigkeit der Filme, die bei Trockeneiskühlung nach Shirakawa herstellbar sind.

Es besteht also die Aufgabe, homogene, mechanisch feste Poly(acetylen)filme in genügender Schichtstärke bei Verwendung gängiger Kühlsorten oder bei Raumtemperatur bzw. bei erhöhter Temperatur herzustellen.

Diese Aufgabe wurde dadurch gelöst, daß man eine Katalysator enthaltene Lösung mit einer Viskosität zwischen 5 und 50 000 mPa.s, bevorzugt 50 und 10 000 mP.s, gemessen bei 20° C, einsetzt und die Polymerisationstemperatur zwischen —15 und +150° C, bevorzugt zwischen +15 und +50° C, hält. Bevorzugt wird die Viskosität durch Polysiloxane, durch polymere Aluminiumalkyle oder durch polymere Titansäureester eingestellt.

Verfahren zur Herstellung von Poly(acetylen)filmen sind an sich bekannt und beispielsweise in den Literaturstellen »Journal of Polymer Science, Polymer Chemical Edition« 12 (1974), 11—20, »Synthetic Metals« 2 (1980), 175—184 oder in der DE-OS 3 120 441 beschrieben. Die erfindungsgemäßen Filme sollen 2 bis 20 000, bevorzugt 10 bis 500 µm, dick sein.

Die Polymerisation des Acetylens ist nicht Gegenstand der vorliegenden Erfindung. Sie ist in der eingangs zitierten Literatur sowie in der Druckschrift DE-OS 3 100 581 beschrieben. Als Katalysatoren kommen die in der DE-OS 2 912 572 sowie die in der oben zitierten Literatur angeführten Verbindungen in Betracht. Besonders geeignet ist ein Zieglerkontakt aus Aluminiumtriethyl und n-Butyltitanat. Das Mischungsverhältnis aus Aluminiumtrialkyl und Titantetrabutylat liegt zwischen 0,5 : 1 und 1 : 0,5, vorzugsweise 1 : 1, jeweils bezogen auf das Gewicht.

Die Poly(acetylen)filme werden auf festen Trägeroberflächen erzeugt. Als Träger kommen dabei insbesondere die in der eingangs zitierten Literatur erwähnten Materialien wie Metalle, Metallfolien, Polyamidfolien oder Polyesterfolien in Betracht.

Nach erfindungsgemäßem Verfahren soll die Übergangsmetallkatalysator enthaltende Lösung, die auf die feste Trägeroberfläche aufgebracht und dort zur Polymerisation des Acetylens verwendet wird, eine Viskosität zwischen 5 und 50 000 mPs.s, vorzugsweise zwischen 50 und 10 000 mPa.s, gemessen bei 20°C (z. B. mit dem Haake-Rotationsviskosimeter VT 180) aufweisen. Außerdem soll die Polymerisationstemperatur zwischen —15 und +150° C, bevorzugt zwischen +15 und +50° C, liegen.

Zur Einstellung der Viskosität der Kontaktflüssigkeit gibt es erfindungsgemäß zwei Möglichkeiten: Entweder man mischt eine polymere, mit dem aktiven Kontakt verträgliche viskose Flüssigkeit zu oder man verwendet einen Zieglerkontakt, der selbst eine viskose Flüssigkeit ist.

Die einzustellende Kontaktviskosität hat bei der Polymerisationstemperatur zwischen 5 und 50 000 mPs.s zu liegen. Höherviskose Kontakte sind mit üblichen technischen Geräten wie Gießern oder Rakeln nicht mehr filmförmig auf die Trägeroberfläche aufzubringen. Liegt die Viskosität des Kontaktes unterhalb von 5 mPs.s, so erhält man, wenn Kontaktfilme der Schichtstärke 2 bis 20 000 µm hergestellt werden sollen, keine befriedigenden Ergebnisse; die Produktfilme haben in diesem Fall

Inhomogenitäten wie bei Verwendung der zu dünnflüssig aufgetretenen Kontaktfilme.

Bei der Auswahl einer geeigneten Polymerflüssigkeit zur Erhöhung der Viskosität des Zieglerkontaktes mußte darauf geachtet werden, daß das Polymere mit dem Zieglerkontakt homogene, Feststoff-freie Lösungen mit Viskositäten von 5 bis 50 000 mPs.s ergibt. Weiterhin soll keine Beeinträchtigung der Aktivität des aktiven Kontakts, z. B. durch unerwünschte chemische Reaktion, erfolgen. Bei Auswahl gemäß dieser Kriterien haben sich, aus der großen Zahl der bekannten Polymeren, vor allem Polysiloxane (Silicone®) bewährt.

Siliconhaltige, aktive Zieglerkontakte ergeben homogene, gießbare Kontaktfilme, sowie homogene Produktfilme nach der Polymerisation, Extraktion und Trocknung. Verwendbare Silikone sind z. B. die bekannten alkyl- und/oder arylsubstituierten Polysiloxane mit Viskositäten von 5 bis 980 000 mPs.s, gemessen bei 20° C, wie sie u. a. von den Firmen Wacker-Chemie GmbH, D-8000 München, oder Th. Goldschmidt AG, D-4300 Essen 1, vertrieben werden. Wacker Silikonöle AK® sind Dimethylpolysiloxane der chemischen Struktur

$$CH_3-[Si(CH_3)_2-O-Si(CH_3)_2-O]_n-Si(CH_3)_3$$

mit 2 bis 1400 Siloxaneinheiten, die mit abgestuften Viskositäten zwischen 0,65 und 100 000 mPs.s im Handel sind. In gleicher Weise sind die Wacker Silikonöle AS®, CR®, AR® und AP®, d. h. die Phenylmethylsilikonöle der chemischen Struktur:

$$R-Si(R)_2-[O-Si(R)_2]\ldots Si(R_2-O-Si(R)_3,$$

wobei $R = CH_3$ und $C_6H_5$, geeignet.

Die Herstellung der aktiven Ziegler-Katalysatoren geschieht in der Weise, daß man Aluminiumtrialkyl und Titansäureester miteinander reagieren läßt. Hierbei läuft eine exotherme Reaktion unter Bildung stöchiometrischer Mengen Ethan ab. Die Reaktion wird bevorzugt in der Gegenwart des Silikonöls durchgeführt, um eine bessere Abfuhr der Reaktionswärme zu gewährleisten, aber auch der nachträgliche Zusatz des viskosen Additivs ist möglich. Die Menge an zuzusetzendem Silikon kann zwischen 0,1 und 99,9 bevorzugt 20 und 80 Gew.-% liegen, bezogen auf den Katalysator. Es gibt mindestens drei wichtige Kriterien, die die Silikonmenge im aktiven Kontakt bestimmen:

1. Je größer die gewünschte Kontakt- und Produkt-Schichtstärke eingestellt werden soll, desto reicher an Silikonöl (viskoser) muß der Kontakt sein.
2. Je höher die Beschichtungs- und Polymerisationstemperatur gekühlt wird, desto viskoser (silikonreicher) muß der Kontakt bei Raumtemperatur sein.
3. Je höhermolekularer der Silikonzusatz ist, desto kleinere Zusatzmengen genügen.

Demnach sind, um den erfindungsgemäßen Viskositätsbereich der aktiven Kontakte mit Silikonöl einzustellen, mehrere Wege möglich.

Die Viskositätserhöhung des aktiven Kontakts kann auch durch Verwendung von viskosen Metallalkylen wie Isoprenylaluminium® bewirkt werden.

Isoprenylaluminium®, (iso $C_4H_9)_n$ $Al_y(C_5H_{10})_{2n}$, worin $y = n$ und n gleich 1 bis 5 ist, Molekulargewicht (kryoskopisch in Cyclohexan) ca. 400, ist ein technisches Produkt der Firmen Schering AG, D-1000 Berlin 65 und Texas Alkyls Inc., Stauffer Chemical Company Division, Westport, Connecticut 06880, USA, das normalerweise als 80%ige Lösung in Heptan mit einer Viskosität von 37,8 mPa.s (20° C) geliefert wird. Das unverdünnte Isoprenylaluminium® hat eine Viskosität von 500 mPa.s (23° C).

Die Viskosität des aktiven Kontaktes kann, bei Verwendung von Aluminiumtriethyl als Metallalkyl, auch durch Verwendung ausgewählter Titansäureester in den gewünschten Bereich angehoben werden. Geeignete Titansäureester werden von der Firma Dynamit Nobel AG, D-5210 Troisdorf-Oberlar 1, beispielsweise unter den Bezeichnungen n-Butyltitanatpolymer® (BuO) $[Ti(OBu)_2O]_nBu$, $n = 4-7$, worin Bu n-Butyl ist, Molekulargewicht (theor.) ca. 1000—1500, Viskosität 2000—6000 mPa.s (20° C), Isobutyltitanatpolymer®, Viskosität 500 mPa.s (20° C) und Kresyltitanatpolymer®, $[(krO)\ Ti(Okr_2)O]_nkr$, $kr = CH_3C_6H_4$ und $n = 2$ bis 7 ist, Viskosität 300—500 mPa.s (20° C), angeboten.

Bei der Verwendung von polymeren Aluminiumtrialkyl bzw. polymeren Titansäureestern erfolgt die Synthese der aktiven Kontakte durch vorsichtige Vereinigung der Komponenten, gegebenenfalls unter Zusatz von inerten Lösungsmitteln wie Kohlenwasserstoffen oder Ethern.

Zur Durchführung der Polymerisation werden die erfindungsgemäßen Kontakte und Kontaktfilme mit Acetylen gegast, danach mit inerten Lösungsmitteln extrahiert und mit Stickstoff getrocknet. Extraktion und Trocknung erfolgen zweckmäßigerweise im Wickel mit Glasvliesen, Glasgeweben, textilen Geweben, Metallgeweben oder Metallfolien, um mit kleinen Apparatevolumina bzw. Lösungsmittelmengen auszukommen.

Die erfindungsgemäßen, viskosen Zieglerkatalysatoren werden mittels einer beweglichen Rakel auf plane Träger filmförmig aufgebracht. Als Träger dient beispielsweise eine Polyesterfolie, die auf eine exakt plane Edelmetallplatte mit randseitigen Bohrungen zwecks Absaugung von Gaspolstern in der Berührungsfläche aufgelegt ist. Eine technisch bevorzugte Variante ist das Vergießen der viskosen

Kontakte mit feststehenden Gießern auf über Walzen bewegte Polyesterträgerfolien.
Bevorzugte Ausführungsformen der Erfindung werden in folgenden Beispielen beschrieben:

## Beispiel 1

### Herstellung eines viskosen Kontakts durch Silikonölzusatz

In einem mit Stickstoff inertisierten Rührkolben wurden 33,8 ml Silikonöl AV 1000® und 35 ml Aluminiumtriethyl (100%ig) vorgelegt. Bei Raumtemperatur ließ man 44 ml Titantetrabutylat langsam zulaufen, wobei man durch Kühlung die Temperatur der Mischung unterhalb 60°C hielt. Die Viskosität der Lösung ist 10 000 mPa.s. Die entstandene, schwarze Reaktionsmischung war viskos, einphasig und unter Inertbedingungen bei Raumtemperatur über Wochen stabil.

## Beispiel 2

Die Kontaktherstellung erfolgte gemäß Beispiel 1, jedoch mit 56,2 ml Silikonöl AV 1000®, 25 ml Aluminiumtriethyl und 31,2 ml Titantetrabutylat als Einsatzstoffe (Viskosität 12 000 mPa.s).

## Beispiel 3

Die Kontaktherstellung erfolgte gemäß Beispiel 1, jedoch mit 101,2 ml Silikonöl AV 1000®, 5 ml Aluminiumtriethyl und 6,2 ml Titantetrabutylat als Einsatzstoffe (Viskosität 25 000 mPa.s).

## Beispiel 4

4 ml einer 80%igen Lösung von Isoprenylaluminium® in Heptan wurden bei Raumtemperatur mit 1,5 ml Titantetrabutylat versetzt. Es entstand ein schwarzer, homogener, viskoser Kontakt (Viskosität 4000 mPa.s).

## Beispiel 5

5 ml Aluminiumtriethyl (100%ig) wurden vorgelegt und bei Raumtemperatur mit 3 ml Butyltitanat polymer® versetzt. Es entstand ein schwarzer, homogener, viskoser Kontakt (Viskosität 7500 mPa.s).

## Beispiel 6

### Herstellung eines Poly(acetylen)films

In einer mit Stickstoff inertisierten Reaktionskammer wurde eine 70 µm starke Trägerfolie aus Polyester (Kalle 2N/HH 75®) bei Raumtemperatur mit aktivem Katalysator aus Beispiel 1 beschichtet. Die Beschichtung erfolgte mit einer Rakel, deren Unterkante mit einer Polyesterfolie (Mylar®) einen Spalt von exakt 100 µm ausbildete. Es entstand ein homogener Katalysatorfilm von 80 bis 90 µm Schichtstärke, der keinerlei Streifen, Inseln oder sonstige Unregelmäßigkeiten einschloß. Anschließend wurde ein Teil des Katalysatorfilms mit Hilfe einer in der Kammer befindlichen Begasungsvorrichtung mit Acetylen (reiner als 99 Gew.-%) von Normaldruck bei Raumtemperatur begast. Man beobachtet eine Aufnahme von im Mittel 0,03 ml Acetylen pro $cm^2$ Filmoberfläche und Minute, gemittelt über eine Zeit von 120 Minuten. Nach 120 Minuten wurde die Polymerisation abgebrochen, der kontakthaltige Poly(acetylen)film vom Träger abgezogen, mit Toluol bei 110°C extrahiert und mit Stickstoff bei 110°C getrocknet. Die Extraktion und Trocknung der Filme führte man, im Wickel mit Glasvlies, in gängigen Extraktionsapparaten durch. Man erhielt hierbei filmförmiges Poly(acetylen) mit einer Schichtstärke von 100 µm.

## Beispiel 7

Man verfuhr wie in Beispiel 6, nur wurde die Polymerisation bereits nach 20 Minuten unterbrochen. Die Schichtstärke des extrahierten, getrockneten Poly(acetylen)films beträgt 20 µm.

Beispiel 8

Man verfuhr wie in Beispiel 6, nur wurde die Polymerisation bereits nach 10 Minuten unterbrochen. Der kontakthaltige Poly(acetylen)film wurde, im Wickel mit Glasvlies, bei Raumtemperatur mit Acetylen (reiner als 99 Gew.-% von Normaldruck 100 Minuten lang nachpolymerisiert. Die Schichtstärke des extrahierten und getrockneten Poly(acetylen)films betrug 80 µm.

Beispiel 9

Es wurde gemäß Beispiel 6 verfahren mit dem Unterschied, daß der Katalysator aus Beispiel 2 eingesetzt wurde. Nach 120 Minuten Acetylenaufnahme (gemittelt 0,025 ml/min $cm^2$), Extraktion und Trocknung erhielt man homogene Poly(acetylen)filme der Schichtstärke 75 µm.

Beispiel 10

Es wurde gemäß Beispiel 6 verfahren mit dem Unterschied, daß der Katalysator aus Beispiel 3 eingesetzt wurde. Nach 120 Minuten Acetylenaufnahme (gemittelt 0,008 ml/min $cm^2$), Extraktion und Trocknung erhielt man homogene (Polyacetylen)filme der Schichtstärke 20 µm.

Beispiel 11

Katalysator aus Beispiel 4 ergab bei Verarbeitung nach Beispiel 6 homogene Kontakt- und abziehbare Produktfilme.

Beispiel 12

Katalysator aus Beispiel 5 ergab bei Verarbeitung nach Beispiel 6, homogene Kontakt- und abziehbare Produktfilme.

Vergleichsversuch

Ein Katalysator aus Aluminiumtriethyl und Titantetrabutylat wurde nach Beispiel 6 verarbeitet. Man erhielt völlig inhomogene Kontaktfilme und entsprechende Produktfilme.

**Patentansprüche**

1. Verfahren zur Herstellung von Poly(acetylen)filmen mit Schichtdicken von 2 bis 20 000 µm durch Polymerisation von Acetylen mit aktiven Übergangsmetallkatalysatoren auf festen Trägeroberflächen, dadurch gekennzeichnet, daß eine Katalysator enthaltende Lösung mit einer Viskosität zwischen 5 und 50 000 mPa.s, gemessen bei 20° C, eingesetzt wird und die Polymerisationstemperatur zwischen —15 und +150° C liegt.
2. Verfahren nach Anspruch 1, dadurch gekennzeichnet, daß die Viskosität zwischen 50 und 10 000 mPa.s liegt.
3. Verfahren nach Anspruch 1, dadurch gekennzeichnet, daß die Viskosität durch Polysiloxane eingestellt ist.
4. Verfahren nach Anspruch 1, dadurch gekennzeichnet, daß die Viskosität durch polymere Aluminiumalkyle eingestellt ist.
5. Verfahren nach Anspruch 1, dadurch gekennzeichnet, daß die Viskosität durch polymere Titansäureester eingestellt ist.
6. Verfahren nach Anspruch 1, dadurch gekennzeichnet, daß die Temperatur zwischen 15 und 50° C liegt.

**Claims**

1. A process for the production of a polyacetylene film which is from 2 to 20 000 µm thick by polymerization of acetylene with an active transition metal catalyst on a solid substrate, wherein a catalyst-containing solution with a viscosity of from 5 to 50 000 mPa.s, measured at 20° C, is employed and the polymerization temperature is from —15 to +150° C.

2. A process as claimed in claim 1, wherein the viscosity is from 50 to 10 000 mPa.s.

3. A process as claimed in claim 1, wherein the viscosity is adjusted by means of a polysiloxane.

4. A process as claimed in claim 1, wherein the viscosity is adjusted by means of a polymeric aluminium-alkyl.

5. A process as claimed in claim 1, wherein the viscosity is adjusted by means of a polymeric titanate.

6. A process as claimed in claim 1, wherein the polymerization temperature is from 15 to 50° C.

## Revendications

1. Procédé pour la production de pellicules de poly(acétylène) ayant des épaisseurs de couche de 2 à 20 000 µm, par polymérisation d'acétylène avec des catalyseurs de métaux de transition actifs sur des surfaces de support solides, caractérisé en ce qu'on utilise une solution contenant le catalyseur qui présente une viscosité, mesurée à 20° C, comprise entre 5 et 50 000 mPa.s et en ce que la température de polymérisation se situe entre −15 et +150° C.

2. Procédé selon la revendication 1, caractérisé en ce que la viscosité se situe entre 50 et 10 000 mPa.s.

3. Procédé selon la revendication 1, caractérisé en ce que la viscosité est réglée par des polysiloxanes.

4. Procédé selon la revendication 1, caractérisé en ce que la viscosité est réglée par des aluminium-alkyles polymères.

5. Procédé selon la revendication 1, caractérisé en ce que la viscosité est réglée par des esters d'acide titanique polymères.

6. Procédé selon la revendication 1, caractérisé en ce que la température se situe entre 15 et 50° C.